# EUROPÄISCHE PATENTSCHRIFT

(11) **EP 0 456 077 B1**
(45) Veröffentlichungstag und Bekanntmachung des Hinweises auf die Patenterteilung: **02.11.1995**
(21) Anmeldenummer: 91106943.3
(22) Anmeldetag: 29.04.1991
(51) Int. Cl.: A01G 9/14

(54) **Träger für Kulturrinnen**
Support for culture channels
Support de gouttières de culture

(30) Priorität: 17.08.1990 DE 4026105; 10.05.1990 DE 4014925
(43) Veröffentlichungstag der Anmeldung: 13.11.1991
(73) Patentinhaber: FISCHER, Ralf Rüdiger, D-63110 Rodgau (DE); FISCHER, Bernd, D-63110 Rodgau (DE)
(72) Erfinder: FISCHER, Ralf Rüdiger, D-63110 Rodgau (DE); FISCHER, Bernd, D-63110 Rodgau (DE)
(74) Vertreter: Katscher, Helmut, Dipl.-Ing.

(56) Entgegenhaltungen:
- WO-A-90/05447
- CH-A- 441 860
- US-A- 4 163 342
- US-A- 4 476 651

## Beschreibung

Die Erfindung betrifft einen Träger für mehrere Kulturrinnen für Pflanzen, wobei die Träger aus horizontalen, quer zu den Kulturrinnen verlaufenden länglichen Tragschienen bestehen, die an ihrer Oberseite nach oben ragende Halteelemente aufweisen.

Die Pflanzen werden in Kulturrinnen eingestellt, um sie in Gewächshäusern oder im Freien zu kultivieren. Die Kulturrinnen dienen dabei zugleich als Bewässerungsrinnen. Am oberen Ende der leicht abfallend angeordneten Kulturrinnen wird Wasser, gegebenenfalls mit darin gelöstem Düngemittel, zugegeben und fließt zum unteren Ende der Kulturrinne. Da die Pflanzen üblicherweise in Pflanzentöpfe auf dem Rinnenboden stehen, nehmen die Pflanzen das Wasser und das Düngemittel auf. Vom unteren Rinnenende wird das Wasser im Kreislauf wieder zum oberen Rinnenende gepumpt. Dadurch werden Verluste und eine Belastung des Bodens vermieden.

Bisher ist es üblich, die Kulturrinnen auf Tische oder ähnliche Gestelle zu stellen. Diese sind aber schwierig zu transportieren. Vor allem ist das Gewicht der als Träger für die Kulturrinnen verwendeten Tische oder Gestelle sehr hoch.

Bei einem bekannten Träger für Kulturrinnen der eingangs genannten Gattung (US-PS 4 476 651), bei dem die Pflanzen ohne Pflanzentöpfe unmittelbar in die Kulturrinnen eingestellt werden, bestehen die Kulturrinnen aus Strangpreßprofilen, die nach unten weisende Rippen haben. Die den Träger für diese Kulturrinnen bildenden Tragschienen sind als Doppel-T-Profile mit liegender Stegfläche ausgebildet, deren nach oben ragende Flansche die Halteelemente bilden, die mit den unteren Rippen der Kulturrinnen über Einschnitte in Eingriff stehen. Auf diese Weise sind die Kulturrinnen zwar gegen eine horizontale Verschiebung gesichert; sie können aber von den Tragschienen abgehoben werden. Deshalb ist es nicht möglich, mehrere Kulturrinnen zusammen mit den sie tragenden Tragschienen als Einheit anzuheben, wenn die Kulturrinnen in der üblichen Weise zum Anheben untergriffen werden, beispielsweise von einem hierfür ausgerüsteten Gabelstapler. Außerdem können für die Kulturrinnen keine einfachen Blechrinnen verwendet werden; vielmehr sind Strangpreßprofile erforderlich, die in der Herstellung teuer sind.

Aufgabe der Erfindung ist es, einen Träger für mehrere Kulturrinnen zu schaffen, der zusammen mit den darin aufgenommenen Kulturrinnen eine leicht zu transportierende Einheit bildet, auf dem die Kulturrinnen sicher und standfest angebracht sind und von dem die Kulturrinnen bei Bedarf auch leicht wieder abgenommen werden können.

Diese Aufgabe wird erfindungsgemäß dadurch gelöst, daß die Halteelemente als einzelne, jeweils von der Oberseite der Tragschiene hochragende Haltelaschen ausgeführt sind und daß jede Kulturrinne zwischen zwei Haltelaschen einrastend gehalten wird.

Die den Träger für die Kulturrinnen bildenden Tragschienen sind verhältnismäßig leicht und können auch einzeln transportiert und platzsparend bereitgehalten werden. Zusammen mit den mehreren Kulturrinnen, die jeweils über Rastverbindungen mit den Tragschienen verbunden sind, wird eine in sich stabile, gut zu transportierende Einheit geschaffen, die bei Bedarf auch wieder leicht demontiert werden kann. Da das Gewicht dieser Einheit nur wenig größer ist als das Gewicht der darin aufgenommenen bestückten Kulturrinnen, kann diese Einheit mit Transporteinrichtungen transportiert und in regalartige Gestelle eingestellt werden.

Insbesondere ist es in einfacher Weise möglich, die auf den Tragschienen aufgenommenen Kulturrinnen zu einer Versorgungsstelle zu transportieren, wo die Pflanzen eingestellt oder entnommen oder das mit Düngemittel versetzte Wasser zugeführt und wieder abgepumpt wird. Da ein solcher Bewässerungs- und Düngevorgang nur in gewissen Zeitabständen erforderlich ist, können die auf den Tragschienen zusammengefaßten Kulturrinnen anschließend wieder aus dem Bereich der Versorgungsstation heraustransportiert und zwischengelagert werden.

Die Herstellung der Tragschienen ist sehr einfach und erfordert nur geringen Materialaufwand.

Gemäß einer bevorzugten Ausführungsform des Erfindungsgedankens ist vorgesehen, daß die Haltelaschen in Längsrichtung der Tragschienen federnd ausgeführt sind.

Stattdessen können die Haltelaschen im wesentlichen auch starr ausgeführt sein und die Kulturrinnen mindestens an ihren oberen Rändern federnd zusammendrückbar sein, um zwischen den Haltelaschen eingerastet zu werden. Jeweils zwei einander gegenüberliegende Haltelaschen greifen mit gegeneinander vorspringenden Rastvorsprüngen in Rastausnehmungen oder über die Oberkanten der Kulturrinnen ein. Damit ist in besonders einfacher Weise eine Rastverbindung zwischen den Kulturrinnen und den Tragschienen hergestellt. Als Rastausnehmungen können Öffnungen in den Seitenwänden der Kulturrinnen dienen, die dort zur Bildung von Haltelaschen für die Pflanzentöpfe ohnehin ausgestanzt sind. Dadurch können zur Aufnahme auf den Tragschienen auch bereits vorhandene Kulturrinnen ohne die Notwendigkeit einer Anpassung oder eines Umbaus verwendet werden.

Vorzugsweise sind die Tragschienen jeweils als nach unten offene U-Schienen ausgeführt. Sie können Laufrollen aufweisen, so daß die aus den Kulturrinnen und den Tragschienen bestehende Einheit auf dem Boden oder auf Laufschienen eines Gestells verfahren werden kann.

Gemäß einer vorteilhaften Ausgestaltung des Erfindungsgedankens können die Haltelaschen aus der obenliegenden Stegfläche der U-förmigen Tragschienen ausgestanzt und hochgebogen werden. Stattdessen ist es aber auch möglich, daß die Haltelaschen von einer Fußplatte nach oben abgewinkelt sind, die mit der Oberseite der Tragschiene verbunden ist.

Fertigungstechnisch besonders günstig ist eine Ausführungsform, bei der zwei gegenüberliegende Haltelaschen mit einer gemeinsamen Fußplatte als einstückiger Haltebügel aus Blech ausgeführt sind, der auf die Stegfläche der Tragschiene beispielsweise mittels Punktschweißung, Nieten oder Fügen befestigt ist.

Gemäß einer bevorzugten Ausführungsform der Erfindung ist vorgesehen, daß die Halteelemente von Haltern gebildet werden, die lösbar auf die Tragschienen aufgesetzt sind. Damit wird erreicht, daß die Tragschienen konstruktiv sehr einfach ausgeführt werden können, beispielsweise als U-Schienen, an denen nur sehr geringfügige Bearbeitungsschritte ausgeführt werden müssen. Die lösbare Verbindung zwischen den Tragschienen und den Kulturrinnen wird durch die Halter hergestellt.

Bevorzugt ist eine Ausführungsform, bei der der Halter eine Grundplatte aufweist, die an zwei gegenüberliegenden Kanten nach unten ragende Schenkel aufweist, die an den Außenseiten der Tragschienen liegen, wobei die Haltelaschen von den beiden anderen Kanten der Grundplatte nach oben ragen. In dieser Ausführungsform kann der Halter in fertigungstechnisch einfacher Weise aus einem im wesentlichen kreuzförmigen Blechzuschnitt dadurch hergestellt werden, daß zwei entgegengesetzte Arme des Blechzuschnitts nach unten und die beiden anderen Arme nach oben abgekantet werden. Die nach oben ragenden Arme des Blechzuschnitts werden an ihren Enden abgewinkelt, um die Haltevorsprünge zu bilden, mit denen die Oberkanten der Kulturrinnen übergriffen oder ggf. in Öffnungen der Kulturrinnen eingegriffen wird.

Bei der Ausführung der die Tragschienen mit den Kulturrinnen verbindenden Kalteelemente als gesonderte Halter werden diese Halter zweckmäßigerweise starr ausgeführt und die Seitenwände der Kulturrinnen werden federnd ausgeführt, damit sie zwischen den beiden nach oben ragenden Haltelaschen federnd ein- und ausgerastet werden können.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 in vereinfachter räumlicher Darstellungweise zwei Tragschienen zur Aufnahme von Kulturrinnen,
Fig. 2 eine vergrößerte Ansicht in Richtung des Pfeiles II in Fig. 1,
Fig. 3 eine vergrößerte räumliche Teilansicht am Ende einer auf einer Tragschiene aufgenommenen Kulturrinne,
Fig. 4 in einer räumlichen Darstellungsweise eine abgewandelte Ausführungsform einer Tragschiene,
Fig. 5 ebenfalls in einer räumlichen Darstellungsweise einen Teil einer Kulturrinne, die auf einer Tragschiene nach Fig. 4 aufgenommen ist,
Fig. 6 eine abgewandelte Ausführungsform in einer Darstellung entsprechend der Fig. 2,
Fig. 7 in vereinfachter räumlicher Darstellungsweise eine abgewandelte Ausführungsform der Verbindung einer Kulturrinne mit der Tragschiene und
Fig. 8 eine Ansicht in Richtung des Pfeiles VIII in Fig. 7.

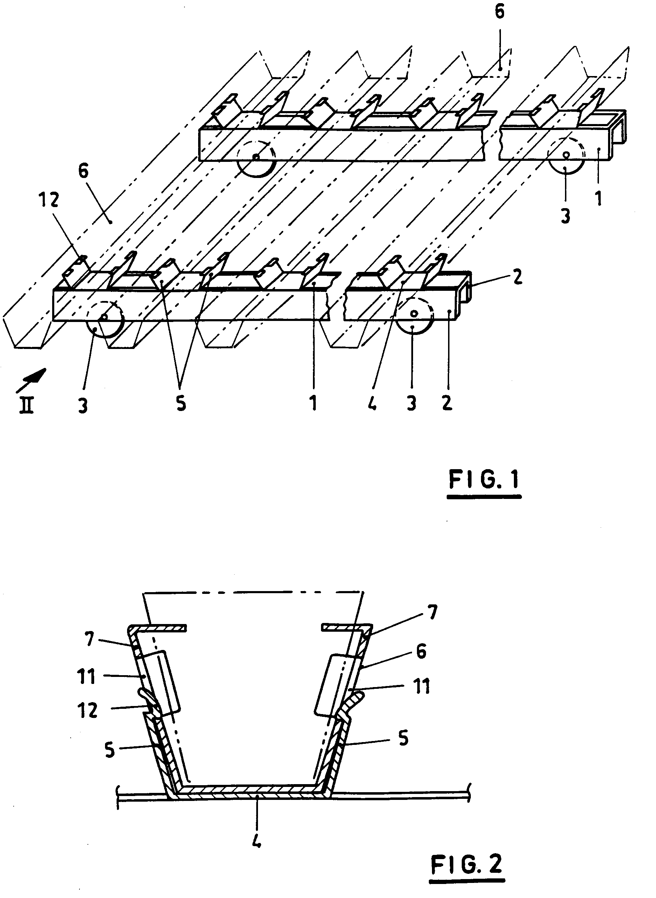

Wie in Fig. 1 gezeigt, sind zwei Tragschienen 1 parallel und im Abstand zueinander angeordnet. Die Tragschienen 1 sind jeweils als nach unten offene U-Schienen ausgeführt und weisen zwischen ihren nach unten ragenden Flanschen 2 Laufrollen 3 auf, mit denen die Tragschienen 1 auf einer ebenen Fläche oder auf Laufschienen eines Gestells verfahren werden können.

Von der oberen Stegfläche 4 jeder Laufschiene sind über deren Länge verteilt Haltelaschen 5 nach oben abgewinkelt. Bei dem in den Fig. 1-3 dargestellten Ausführungsbeispiel sind die Haltelaschen 5 aus der Stegfläche 4 ausgestanzt und nach oben abgewinkelt.

Jeweils zwei Haltelaschen 5, zwischen denen ein Stück der Stegfläche 4 stehengeblieben ist, nehmen zwischen sich eine Kulturrinne 6 auf, die in Fig. 1 mit strichpunktierten Linien nur angedeutet ist.

Die Kulturrinne 6 hat nach oben divergierende Seitenwände 7. An den schrägen Verlauf dieser Seitenwände 7 ist die Neigung der Haltelaschen 5 angepaßt.

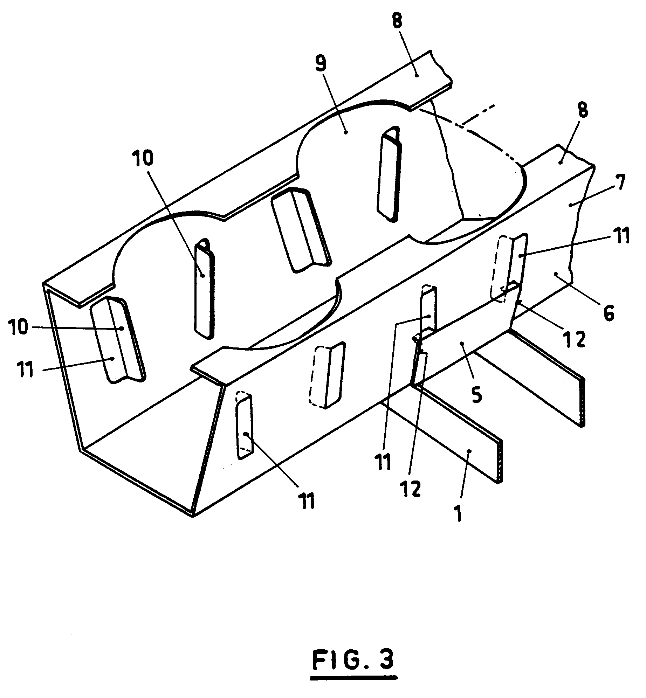

Wie man besonders deutlich aus Fig. 3 erkennt, sind von den Oberkanten der Seitenwände 7 Randstreifen 8 nach innen abgekantet. Die Randstreifen 8 weisen Halteausnehmungen 9 auf, die in Rinnenlängsrichtung im Abstand zueinander angeordnet und an die Form der aufzunehmenden Pflanzentöpfe angepaßt sind.

Beiderseits jeder Halteausnehmung 9 sind aus den Seitenwänden 7 jeweils Haltestreifen 10 ausgestanzt und in das Innere der Kulturrinne 6 umgekantet. Diese Haltestreifen dienen dazu, den unterhalb der Randstreifen 8 liegenden Abschnitt des aufgenommenen Pflanzentopfes zusätzlich zu halten, um ein Kippen in Rinnenlängsrichtung zu vermeiden. Durch das Ausstanzen der Haltestreifen 10 sind Stanzöffnungen 11 in den Rinnenseitenwänden 7 entstanden. Diese Stanzöffnungen 11 liegen im Abstand über dem Rinnenboden, so daß das entlang dem Rinnenboden strömende Wasser durch die Stanzöffnung 11 nicht austreten kann.

Beim Beispiel nach Fig. 1 und 2 sind die von den Tragschienen 1 hochgekanteten Haltelaschen 5 im wesentlichen starr ausgeführt und weisen gegeneinander vorspringende Rastvorsprünge 12 oder Rastvorsprünge auf, die in die Stanzöffnungen 11 einrastend eingreifen. Zum Einrasten und Ausrasten können die Kulturrinnen 6 federnd zusammengedrückt werden. Auf diese Weise werden die Kulturrinnen 6 auf den Tragschienen 1 gehalten.

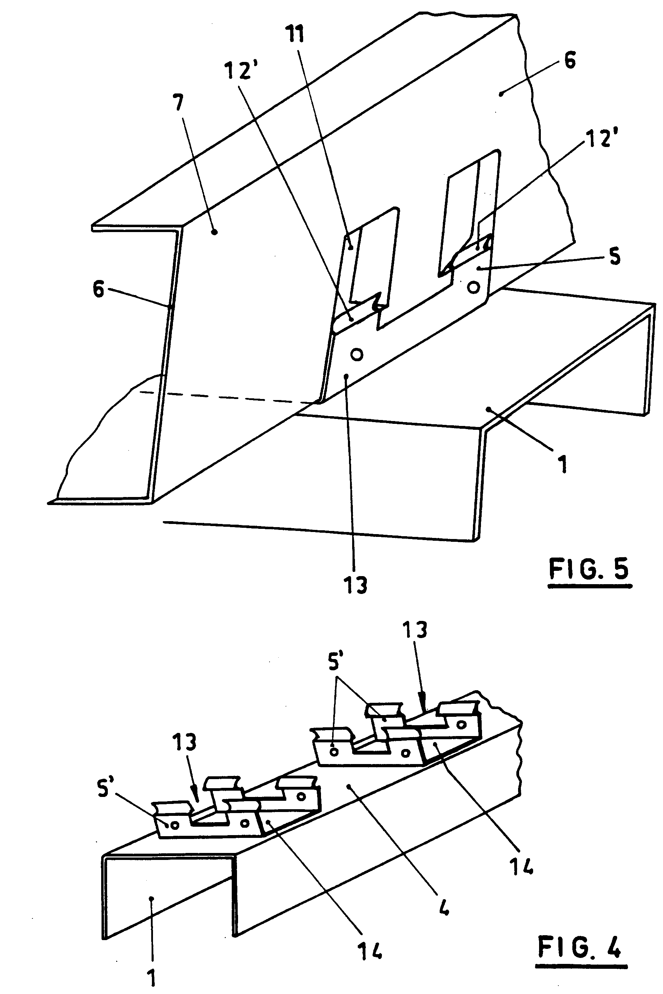

Während die Haltelaschen 5 bei dem Ausführungsbeispiel nach den Fig. 1-3 einstückig aus den Tragschienen 1 durch Ausstanzen und Hochbiegen gebildet sind, sind die Haltelaschen 5' beim Ausführungsbeispiel nach den Fig. 4 und 5 jeweils Teil eines Haltebügels 13, der aus einer Fußplatte 14 und den beiderseits davon nach oben abgewinkelten Haltelaschen 5' besteht. Die Fußplatte 14 jedes Haltebügels 13 ist mit der obenliegenden Stegfläche 4 der Tragschiene 1 beispielsweise mittels Punktschweißung verbunden. Bei diesem Beispiel sind die Haltelaschen 5' in Längsrichtung der Tragschienen 7 federnd ausgeführt.

Die Rastvorsprünge 12' an den oberen Enden der Haltelaschen 5' werden hierbei durch einen hakenförmigen Endabschnitt der Haltelaschen 5' gebildet. Wie man aus Fig. 5 erkennt, greifen auch diese Rastvorsprünge 12' einrastend in die Stanzöffnungen 11, die in den Seitenwänden 7 der Kulturrinnen 6 ausgebildet sind. Die obere, zurückgebogene Zunge des Endabschnitts der Haltelasche 5' erleichtert das Einrasten der Kulturrinnen 6.

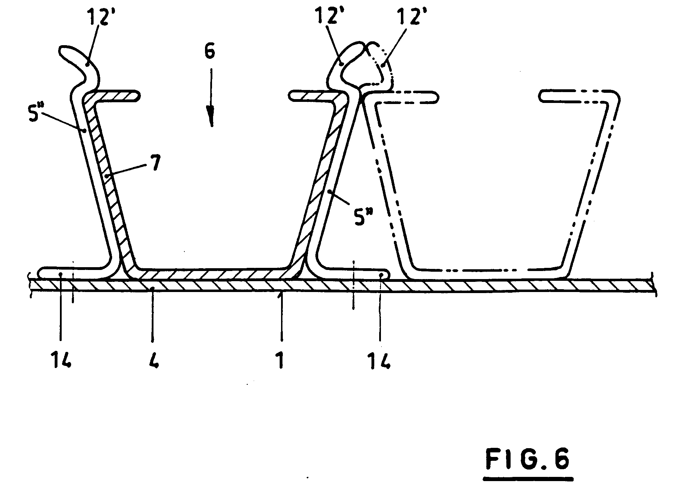

In Fig. 6 ist gezeigt, daß die Haltelaschen 5'' auch so lang ausgeführt sein können, daß sie über die Oberkante der Kulturrinnen 6 greifen. Bei dieser Ausführungsform ist es nicht erforderlich, daß die Kulturrinnen 6 gesonderte Rastausnehmungen aufweisen. Bei der Ausführung nach Fig. 6 können die Haltelaschen 5'' und/oder die oberen Ränder der Kulturrinnen 6 federnd ausgeführt sein, um das Einrasten zu ermöglichen.

In Fig. 6 ist mit strichpunktierten Linien weiter angedeutet, daß zwischen die von den Haltelaschen 5'' gehaltenen Kulturrinnen 6 jeweils eine oder mehrere zusätzliche Kulturrinnen lose eingestellt werden können. Stattdessen ist es auch möglich, die Haltelaschen 5'' so auszubilden, daß sie - wie ebenfalls mit strichpunktierten Linien angedeutet ist - nach beiden Richtungenw weisende Rastvorsprünge 12' aufweisen, damit auch die zusätzlich eingestellten (hier mit strichpunktierten Linien eingezeichneten) Kulturrinnen 6 einrastend gehalten werden.

Ebenso wie beim Ausführungsbeispiel nach Fig 4 können auch beim Beispiel nach Fig. 6 die - hier einzeln dargestellten - Haltelaschen 5'' an der Stegfläche der Tragschienen 1 mittels Punktschweißung angeschweißt, angenietet, angeschraubt oder durch Fügen befestigt werden.

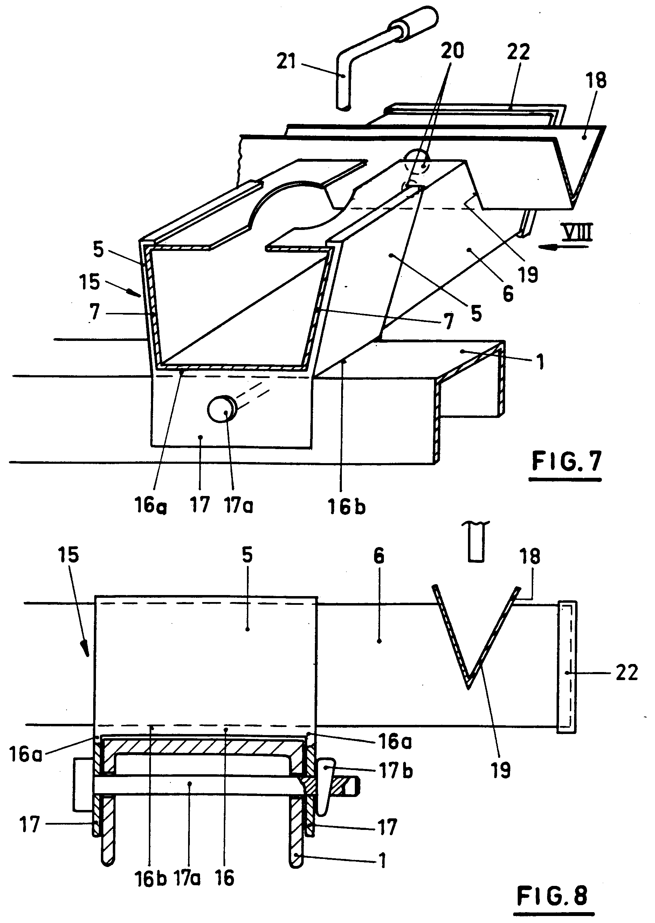

Die Fig. 7 und 8 zeigen eine weitere, besonders zweckmäßige Ausführungsform. Die die Kulturrinnen 6 mit den beiden Tragschienen 1 verbindenden Halteelemente sind hierbei als einstückige Halter 15 ausgeführt, die lösbar auf die Tragschienen 1 aufgesetzt sind.

Jeder Halter 15 weist eine rechteckige Grundplatte 16 auf, von deren beiden gegenüberliegenden Kanten 16a jeweils ein Schenkel 17 nach unten ragt. Die beiden Schenkel 17 liegen an den Außenseiten der Tragschienen 1 an. Von den beiden anderen Kanten 16b der Grundplatte 16 ragen Haltelaschen 5 nach oben und greifen mit ihren Enden über die Oberkanten der Kulturrinne 6.

Die Kulturrinnen 6 sind federnd ausgeführt, so daß ihre Seitenwände 7 federnd nach innen gedrückt werden können, um zwischen die hierbei starr ausgeführten Haltelaschen 5 ein- bzw. ausgerastet zu werden. Der gesamte Halter 15 ist starr ausgeführt. Stattdessen kann der Halter 15 auch federnd ausgeführt sein.

Die beiden Schenkel 17 der Halter 15 und die Tragschienen 1 weisen jeweils miteinander fluchtende Bohrungen auf, durch die ein gemeinsamer Haltebolzen 17a gesteckt ist. Wie in Fig. 8 angedeutet, ist der Haltebolzen 17a durch ein lösbares Sicherungselement 17b gesichert, beispielsweise einen eingesteckten Keil oder Splint. Der Haltebolzen 17a ermöglicht eine rasche Montage und Demontage des Halters 15, wobei eine formschlüssige Verbindung hergestellt wird. Diese formschlüssige Verbindung ermöglicht es, mehrere miteinander verbundene Kulturrinnen 6 zusammen mit ihren beiden Tragschienen 1 als Einheit abzuheben und zu transportieren.

In den Fig. 7 und 8 ist weiter gezeigt, daß mehrere Kulturrinnen 6 nahe ihrem einen Ende durch eine gemeinsame aufgesetzte Bewässerungsrinne 18 verbunden sind, die horizontal und quer zu den Kulturrinnen 6, d.h. parallel zu den Tragschienen 1 verläuft. In einer Seitenwand der Bewässerungsrinne 18 sind jeder Kulturrinne 6 beim dargestellten Ausführungsbeispiel zwei Auslauflöcher 20 zugeordnet. Die an ihren Enden verschlossene (nicht dargestellt) Bewässerungsrinne 18 wird über einen Wasserzulauf 21 ständig oder nur beim Durchlauf durch eine Bewässerungsstation mit Wasser und gelösten Düngestoffen versorgt. Das Wasser läuft durch das untere Auslaufloch 20 in die jeweils zugeordnete Kulturrinne 6 in der gewünschten Menge.

Jede Kulturrinne 6 hat leichtes Gefälle, so daß das zugeführte Wasser entlang der Kulturrinne 6 läuft und dabei von den eingestellten Pflanzen aufgenommen wird. Überschüssiges Wasser läuft am entgegengesetzten Ende der Kulturrinnen 6 in eine gemeinsame Sammelrinne und kann von dort wieder im Kreislauf geführt werden.

Ein oberes, größeres Auslaufloch 20 dient als Überlauf, falls das darunter befindliche, kleinere Auslaufloch verstopft ist.

Die Kulturrinnen 6 weisen jeweils von ihrem oberen Rand ausgehende Einschnitte 19 auf, in die die gemeinsame Bewässerungsrinne 18 eingesetzt ist. Bei dem dargestellten Ausführungsbeispiel sind die Einschnitte 19 und die Bewässerungsrinne 18 mit V-Profil mit gleichem Winkel ausgeführt.

Wie in den Fig. 7 und 8 angedeutet, können die Kulturrinnen 6 (ebenso wie die Bewässerungsrinnen 18) an ihren Enden jeweils mit einer Kappe 22 verschlossen sein. Bei ausreichendem Gefälle der Kulturrinnen 6 sind solche Verschlußkappen 22 aber nicht erforderlich.

## Patentansprüche

1. Träger für mehrere Kulturrinnen (6) für Pflanzen, wobei die Träger aus horizontalen, quer zu den Kulturrinnen verlaufenden länglichen Tragschienen (1) bestehen, die an ihrer Oberseite nach oben ragende Halteelemente aufweisen, dadurch gekennzeichnet, daß die Halteelemente als einzelne, jeweils von der Oberseite der Tragschiene hochragende Haltelaschen (5, 5', 5'') ausgeführt sind und daß jede Kulturrinne (6) zwischen zwei Haltelaschen (5, 5', 5'') einrastend gehalten wird.

2. Träger nach Anspruch 1, dadurch gekennzeichnet, daß die Haltelaschen (5') in Längsrichtung der Tragschienen (1) federnd ausgeführt sind.

3. Träger nach Anspruch 1, dadurch gekennzeichnet, daß die Haltelaschen im wesentlichen starr ausgeführt sind und die Kulturrinnen (6) mindestens an ihren oberen Rändern federnd zusammendrückbar sind.

4. Träger nach Anspruch 1, dadurch gekennzeichnet, daß jeweils zwei einander gegenüberliegende Haltelaschen (5, 5') mit gegeneinander vorspringenden Rastvorsprüngen (12, 12') in Rastausnehmungen (11) der Kulturrinnen (6) eingreifen.

5. Träger nach Anspruch 1, dadurch gekennzeichnet, daß jeweils zwei einander gegenüberliegende Haltelaschen (5'') mit gegeneinander vorspringenden Rastvorsprüngen (12') über den Oberkanten der Kulturrinnen (6) einrasten.

6. Träger nach Anspruch 1 oder 5, dadurch gekennzeichnet, daß die Tragschienen (1) Laufrollen (3) aufweisen.

7. Träger nach Anspruch 5, dadurch gekennzeichnet, daß die Haltelaschen (5) aus der obenliegenden Stegfläche (4) der U-förmigen Tragschienen (1) ausgestanzt und hochgebogen sind.

8. Träger nach Anspruch 5, dadurch gekennzeichnet, daß die Haltelaschen (5') von einer Fußplatte (14) nach oben abgewinkelt sind, die mit der Oberseite der Tragschiene (1) verbunden ist.

9. Träger nach Anspruch 8, dadurch gekennzeichnet, daß zwei gegenüberliegende Haltelaschen (5') mit einer gemeinsamen Fußplatte (14) als einstückiger Haltebügel (13) aus Blech ausgeführt sind.

10. Träger nach Anspruch 9, dadurch gekennzeichnet, daß der Haltebügel (13) auf der Stegfläche (4) der Tragschiene (1) mittels Punktschweißung, Nieten oder Fügen befestigt ist.

11. Träger nach Anspruch 1, dadurch gekennzeichnet, daß die Tragschienen (1) jeweils als nach unten offene U-Schienen ausgeführt sind.

12. Träger nach einem der Ansprüche 1 bis 11, dadurch gekennzeichnet, daß die Halteelemente von Haltern (15) gebildet werden, die lösbar auf die Tragschienen (1) aufgesetzt sind.

13. Träger nach Anspruch 12, dadurch gekennzeichnet, daß der Kalter (15) eine Grundplatte (16) aufweist, die an zwei gegenüberliegenden Kanten (16a) nach unten ragende Schenkel (17) aufweist, die an den Außenseiten der Tragschienen (1) liegen, und daß die Haltelaschen (5) von den beiden anderen Kanten (16b) der Grundplatte (16) nach oben ragen.

14. Träger nach Anspruch 13, dadurch gekennzeichnet, daß die Schenkel (17) der Halter (15) und die Tragschienen (1) jeweils miteinander fluchtende Bohrungen aufweisen, durch die ein gemeinsamer Haltebolzen (17a) gesteckt ist, der ein lösbares Sicherungselement (17b) aufweist.

15. Träger nach Anspruch 13, dadurch gekennzeichnet, daß der Halter (15) starr ausgeführt ist und daß die Seitenwände (7) der Kulturrinnen (6) federnd ausgeführt sind.

16. Träger nach Anspruch 12 oder 13, dadurch gekennzeichnet, daß der Halter (15) federnd ausgeführt ist.

17. Träger nach Anspruch 1, dadurch gekennzeichnet, daß mehrere Kulturrinnen (6) nahe ihrem einen Ende durch eine gemeinsame aufgesetzte, parallel zu den Tragschienen (1) verlaufende Bewässerungsrinne (18) verbunden sind, an der jeder Kulturrinne (6) mindestens ein Auslaufloch (20) zugeordnet ist.

18. Träger nach Anspruch 16, dadurch gekennzeichnet, daß die Kulturrinnen (6) von ihrem oberen Rand ausgehende Einschnitte (19) aufweisen, in die die gemeinsame Bewässerungsrinne (18) eingesetzt ist.

19. Träger nach Anspruch 17, dadurch gekennzeichnet, daß die Einschnitte (19) und die Bewässerungsrinne (18) gleiches Profil aufweisen.

## Claims

1. Support for several culture channels (6) for plants, the support comprising horizontal, longitudinal support rails (1) running crosswise to the culture channels, said rails having on their upper side retaining elements projecting upward, characterized in that the retaining elements are of a type such as single fishplates (5, 5', 5''), each protruding upward from the top of the support rail and that each culture channel (6) is held locked between two fishplates (5, 5', 5'').

2. Support according to Claim 1, characterized in that the fishplates (5') in the longitudinal direction of the support rails (1) are of a resilient type.

3. Support according to Claim 1, characterized in that the fishplates are essentially of a rigid type and the culture channels (6), at least at their upper edges, can be resiliently pressed together.

4. Support according to Claim 1, characterized in that in each case two fishplates lying opposite each other (5, 5') with locking projections (12, 12') projecting against each other engage in locking recesses (11) of the culture channels (6).

5. Support according to Claim 1, characterized in that in each case two fishplates lying opposite each other (5'') lock in with locking projections (12) projecting against each other over the top rims of the culture channels (6).

6. Support according to Claim 1 or 5, characterized in that the support rails (1) have running rollers (3).

7. Support according to Claim 5, characterized in that the fishplates (5) have been punched out of the top web surface (4) of the U-shaped support rails and bent up.

8. Support according to Claim 5, characterized in that the fishplates (5') have been bent upwards from a base plate (14) which is joined to the top of the support rail (1).

9. Support according to Claim 8, characterized in that two fishplates opposite each other (5') with a common base plate (14) have been made as a single-piece sheet-metal retaining clip (13).

10. Support according to Claim 9, characterized in that the retaining clip (13) on the web surface (4) of the support rail (1) is attached by means of spot-welding, rivetting or jointing.

11. Support according to Claim 1, characterized in that the support rails (1) are in each case made as U-rails opening downwards.

12. Support according to one of Claims 1 to 11, characterized in that the retaining elements are formed from holders (15) which are placed detachably onto the support rails (1).

13. Support according to Claim 12, characterized in that the holder (15) has a bottom plate (16) which has side-pieces (17) projecting downwards on two opposite edges (16a), said side-pieces lying at the outer sides of the support rails (1), and that the fishplates (5) of the two other edges (16b) of the bottom plate (16) project upwards.

14. Support according to Claim 13, characterized in that the side-pieces (17) of the holders (15) and the support rails (1) in each case have drilled holes in alignment with each other, through which a common retaining bolt (17a) is pushed, which has a detachable securing element (17b).

15. Support according to Claim 13, characterized in that the holder (15) is of a rigid type and that the side walls (7) of the culture channels (6) are of a resilient type.

16. Support according to Claim 12 or 13, characterized in that the holder (15) is of a resilient type.

17. Support according to Claim 1, characterized in that several culture channels (6) are joined close to one of their ends by a common watering channel (18) placed onto them, running parallel to the support rails (1), on which at least one outflow hole (20) is allocated to each culture channel (6).

18. Support according to Claim 16, characterized in that the culture channels (6) have incisions (19) starting from their top edges, into which the common watering channel (18) is inserted.

19. Support according to Claim 17, characterized in that the incisions (19) and the watering channel (18) have the same profile.

## Revendications

1. Supports pour plusieurs gouttières de culture (6) pour plantes, les supports étant constitués de profilés porteurs (1) longitudinaux et horizontaux s'étendant transversalement aux gouttières de culture, lesdits profilés présentant des éléments de retenue faisant saillie de leur surface vers le haut, caractérisés en ce que les éléments de retenue se présentent sous la forme d'éclisses de retenue individuelles (5, 5', 5'') faisant respectivement saillie vers le haut de la surface des profilés porteurs et en ce que chaque gouttière de culture (6) est maintenue par encliquetage entre deux éclisses de retenue (5, 5', 5'').

2. Supports selon la revendication 1, caractérisés en ce que les éclisses de retenue (5') sont réalisées de manière élastique dans la direction longitudinale des profilés porteurs (1).

3. Supports selon la revendication 1, caractérisés en ce que les éclisses de retenue se présentent sous forme sensiblement rigide et les gouttières de culture (6) sont compressibles de manière élastique au moins sur leurs bords supérieurs.

4. Supports selon la revendication 1, caractérisés en ce que, respectivement, deux éclisses de retenue (5, 5') en regard l'une de l'autre s'enclenchent par des saillies d'encliquetage (12, 12') saillant de celles-ci dans des évidements d'encliquetage (11) des gouttières de culture (6).

5. Supports selon la revendication 1, caractérisés en ce que, respectivement, deux éclisses de retenue (5'') en regard l'une de l'autre s'encliquètent par des saillies d'encliquetage (12') saillant de celles-ci sur les bords supérieurs des gouttières de culture (6).

6. Supports selon la revendication 1 ou 5, caractérisés en ce que les profilés porteurs (1) présentent des galets de roulement (3).

7. Supports selon la revendication 5, caractérisés en ce que les éclisses de retenue (5) sont matricées dans la surface transversale supérieure (4) des profilés porteurs (1) en forme de U et sont pliées vers le haut.

8. Supports selon la revendication 5, caractérisés en ce que les éclisses de retenue (5') sont repliées vers le haut à partir d'un pied (14) qui est relié à la partie supérieure du profilé porteur (1).

9. Supports selon la revendication 8, caractérisés en ce que deux éclisses de retenue (5') en regard l'une de l'autre sont réalisées avec un pied commun (14) sous la forme d'un étrier de retenue d'une pièce (13) constitué de tôle.

10. Supports selon la revendication 9, caractérisés en ce que l'étrier de retenue (13) est fixé sur la surface transversale (4) du profilé porteur (1) par soudage par points, rivetage ou assemblage.

11. Supports selon la revendication 11, caractérisés en ce que les profilés porteurs (1) se présentent respectivement sous la forme de profilés en U ouverts vers le bas.

12. Supports selon l'une quelconque des revendications 1 à 11, caractérisés en ce que les éléments de retenue sont formés par des supports (15) qui sont montés sur les profilés porteurs (1) de manière amovible.

13. Supports selon la revendication 12, caractérisés en ce que le support (15) présente une embase (16) qui comporte deux branches (17) faisant saillie vers le bas sur deux bords en regard (16a), lesdites branches se trouvant sur les faces externes des profilés porteurs (1), et en ce que les éclisses de retenue (5) font saillie vers le haut, des deux autres côtés (16b) de l'embase (16).

14. Supports selon la revendication 13, caractérisés en ce que les branches (17) des supports (15) et les profilés porteurs (1) présentent des orifices respectivement alignés les uns avec les autres et à travers lesquels est enfiché un boulon de retenue commun (17a) qui présente un élément de fixation amovible (17b).

15. Supports selon la revendication 13, caractérisés en ce que le support (15) est rigide et en ce que les parois latérales (7) des gouttières de culture (6) sont élastiques.

16. Supports selon la revendication 12 ou 13, caractérisés en ce que le support (15) est élastique.

17. Supports selon la revendication 1, caractérisés en ce que plusieurs gouttières de culture (6) sont reliées, à proximité de leur première extrémité, par une gouttière d'irrigation (18) commune s'étendant parallèlement aux profilés porteurs (1), sur laquelle au moins un orifice d'évacuation (20) est affecté à chaque gouttière de culture (6).

18. Supports selon la revendication 16, caractérisés en ce que les gouttières de culture (6) présentent des découpes (19) pratiquées dans leur bord supérieur, dans lesquelles la gouttière d'irrigation (18) commune est insérée.

19. Supports selon la revendication 17, caractérisés en ce que les découpes (19) et la gouttière d'irrigation (18) présentent le même profil.
